Europäisches Patentamt

European Patent Office

Office européen des brevets

(19)

(11) Publication number: 0 140 260
A1

## (12) EUROPEAN PATENT APPLICATION

(21) Application number: 84112356.5

(22) Date of filing: 13.10.84

(51) Int. Cl.⁴: A 01 C 15/00

(30) Priority: 28.10.83 US 546699

(43) Date of publication of application:
08.05.85 Bulletin 85/19

(84) Designated Contracting States:
DE FR GB

(71) Applicant: DEERE & COMPANY
1 John Deere Road
Moline Illinois 61265(US)

(72) Inventor: Hartwig, Donald Richard
2013 36th Street
Rock Island Illinois 61201(US)

(72) Inventor: Wolf, Lester Carl
2578 - 9 1/2 Street
East Moline Illinois 61244(US)

(72) Inventor: Wood, Mark William
5620 34th Avenue, Apt. 4B
Moline Illinois 61265(US)

(74) Representative: Sartorius, Peter et al,
DEERE & COMPANY European Office, Patent
Department Postfach 503 Steubenstrasse 36-42
D-6800 Mannheim 1(DE)

(54) Seeding device.

(57) Der Sammelbehälter (26) einer Sävorrichtung (10) ist mit Gleitplatten (37, 41) ausgerüstet, die auf Anschläge (38, 42) aufweisenden Führungselementen (36, 40) verschiebbar gelagert und mittels einer Verriegelungsvorrichtung (50) in der Arbeitsstellung arretierbar sind. Die im Sammelbehälter (26) vorgesehene Dosiervorrichtung (28) wird über ein Zahnrad (46) angetrieben und durch Zurückschieben des Sammelbehälters (26) in die Arbeitsstellung automatisch mit einem Antriebsrad (32) einer Hauptantriebsvorrichtung (30) in Antriebsverbindung gebracht. Soll der Sammelbehälter (26) abgebaut werden, so braucht lediglich die Verriegelungsvorrichtung (50) betätigt und der Sammelbehälter (26) in eine Entnahmestellung verschoben zu werden, bis die Führungselemente (36, 40) die Gleitplatten (37, 41) freigeben. Durch Verschieben des Sammelbehälters (26) in die Entnahmestellung wird gleichzeitig die Antriebsverbindung zwischen dem Antriebsrad (32) und dem Zahnrad (46) unterbrochen.

Fig. 4

## Sämaschine

Die Erfindung bezieht sich auf eine Sämaschine mit mindestens einer Sävorrichtung, auf deren Rahmen ein Sammelbehälter lösbar angeschlossen ist, der mit einer über eine Antriebsvorrichtung antreibbaren Dosierungsvorrichtung ausgerüstet ist.

Es ist bereits eine Sämaschine der eingangs aufgeführten Art bekannt (Betriebsanleitung John Deere, OM-A 45513, Issue E2), die auf einem Rahmen lösbar angeschlossene Sammelbehälter zur Aufnahme von Saatgut bzw. Düngemittel aufweist, die hierzu mit seitlich heraustehenden Zapfen versehen sind, die in nach oben offene Schlitzführungen einsetzbar und arretierbar sind. Die Sammelbehälter weisen ferner eine Dosierungsvorrichtung auf, die über ein Kettengetriebe antreibbar ist, deren Kette zum Abbau des Sammelbehälters entfernt werden muß, was relativ zeitaufwendig ist.

Der Erfindung liegt die Aufgabe zugrunde, den Sammelbehälter mit der zugehörigen Antriebsvorrichtung für die Dosiervorrichtung derart auszubilden und anzuordnen, daß in kürzester Zeit ein An- und Abbau des Sammelbehälters durchführbar ist. Diese Aufgabe ist dadurch gelöst worden, daß die Dosierungsvorrichtung ein getriebenes Antriebsrad aufweist, das mittels Führungselementen mit dem Sammelbehälter zwischen einer ersten Stellung, in der das getriebene Antriebsrad mit einem antreibbaren Treibelement in Antriebsverbindung bringbar ist, und einer zweiten Stellung horizontal verschiebbar ist, in der die Antriebsverbindung unterbrochen ist, wobei in der ersten Stellung des Sammelbehälters das antreibbare Treibelement über Arretierungselemente gegen Verstellen sicherbar ist. Durch die vorteilhafte Ausbildung und Anordnung der Dosierungsvorrichtung mit den zugehörigen Antriebselementen läßt sich der Ab- und Anbau des Sammelbehälters in kürzester Zeit durchführen, da auf einfache Weise zwischen dem Antriebsrad zum Antrieb der Dosierungsvorrichtung und dem Antriebselement der Hauptantriebsvorrichtung durch Verschieben des Sammelbehälters in seine Arbeitsstellung in kürzester Zeit eine Antriebsverbindung zwischen den beiden Antriebselementen hergestellt werden kann. Dies wird in vorteilhafter Weise dadurch erleichtert, daß der horizontal verschiebbare Sammelbehälter horizontal verlaufende Gleitplatten aufweist, die auf mit dem Rahmen verbundenen Führungselementen verschiebbar gelagert sind. Da der Sammelbehälter mit horizontal verlaufenden Gleitplatten ausgerüstet ist, die sich auf Führungselementen abstützen, läßt sich ohne weiteres eine Verstellung des Sammelbehälters aus seiner Arbeitsstellung in eine Entnahmestellung vornehmen, nachdem die Verriegelungsvorrichtung durch Verstellen in eine Entriegelungsstellung betätigt worden ist. Durch Verschieben des Sammelbehälters in eine Entnahmestellung löst sich gleichzeitig auch die Antriebsverbindung zwischen den beiden Antriebselementen zum Antrieb der Dosierungsvorrichtung. Eine einwandfreie Verbindung des Sammelbehälters mit den den Sammelbehälter aufnehmenden Rahmen wird dadurch gewährleistet, daß die Arretierungselemente aus nach oben gerichteten, hakenförmigen, an den Führungselementen angeordneten Anschlägen sowie aus einer Verriegelungsvorrichtung bestehen und daß die Verriegelungsvorrichtung aus an den Führungselementen vorgesehenen Laschen und aus über einen Handgriff verstellbaren Haken gebildet ist, die am Sammelbehälter verschwenkbar gelagert und mit den Laschen in Eingriff bringbar sind. Da die Verriegelungsvorrichtung mit einem Handgriff ausgerüstet ist, läßt sich in kürzester Zeit eine Entriegelung zur Verstellung des Sammelbehälters in eine Entnahmestellung durchführen. Dabei ist es vorteilhaft, daß die Haken an der Rückseite des Sammelbehälters angeordnet und über eine Feder in eine den Sammelbehälter sichernde Stellung bringbar sind. Durch Verwendung einer Feder wird der Haken der Verriegelungsvorrichtung immer in eine Arretierungsstellung verschwenkt und automatisch beim Einschieben des Sammelbehälters in seine Arbeitsstellung eine Verbindung des Hakens mit der am Rahmen vorgesehenen Lasche herbeigeführt, ohne daß zusätzliche Arbeitsgänge erforderlich sind. Durch den Haken wird außerdem gewährleistet, daß die Antriebsverbindung zwischen den Antriebselementen zum Antrieb der Dosierungsvorrichtung aufrechterhalten wird.

Um eine einwandfreie Führung des Sammelbehälters auf dem Rahmen zu gewährleisten und gleichzeitig eine seitliche Verstellung des Sammelbehälters zu verhindern, wenn dieser horizontal verschoben wird, ist es in weiterer Ausgestaltung der Erfindung vorteilhaft, daß der Rahmen aus zwei parallel zueinander verlaufenden Paneelen gebildet ist, an denen die Führungselemente seitlich angeordnet sind, während die Gleitplatten im Bereich der Seitenkanten des Sammelbehälters an seiner Unterseite angeordnet sind und sich auf den Führungselementen abstützen.

Im folgenden wird die Erfindung anhand von lediglich einen Ausführungsweg darstellenden Zeichnungen näher erläutert. Es zeigt:

Fig. 1 eine perspektivische Darstellung einer Sävorrichtung mit einem Saatgutbehälter und einem Behälter für Düngemittel,

Fig. 2 eine Draufsicht entlang der Linie 2 - 2 gemäß Fig. 1, wobei Teile des Behälters für Düngemittel zur besseren Darstellung weggeschnitten sind,

Fig. 3 eine schematische Darstellung von Führungselementen, die am Rahmen angeschlossen sind und Seitenplatten und Verriegelungselemente für den Behälter von Düngemittel aufweisen,

Fig. 4    eine Seitenansicht entlang der Linie 4 - 4 gemäß Fig. 2, wobei das getriebene Zahnrad der Meßvorrichtung für Düngemittel mit dem getriebenen Zahnrad in Eingriff steht und der Behälter für Düngemittel mit Bezug auf den Rahmen gegen Verstellen gesichert ist,

Fig. 5    eine vergrößerte Seitenansicht entlang der Linie 5 - 5 gemäß Fig. 2, wobei die Verriegelungsvorrichtung in ihre Arretierungsstellung gebracht ist (ausgezogene Linien), und die in gestrichelten Linien dargestellte Stellung der Verriegelungsvorrichtung, die die Entriegelungsstellung zeigt,

Fig. 6    eine Seitenansicht ähnlich wie in Fig. 4, wobei das getriebene und das angetriebene Zahnrad außer Eingriff stehen und der Behälter für Düngemittel horizontal nach hinten verschoben ist,

Fig. 7    eine Seitenansicht ähnlich wie in Fig. 4 und 6, wobei der Behälter für Düngemittel vom Rahmen abgenommen ist.

In der Zeichnung ist mit 10 eine Sävorrichtung für eine Sämaschine bezeichnet, die über parallel verlaufende Lenker 12 mit einem Rahmen 14 der Sävorrichtung 10 verbunden ist. Der Rahmen 14 ist an den Hauptrahmen 16 angeschlossen. Die parallel verlaufenden Lenker 12 ermöglichen eine Vertikalverstellung der Sävorrichtung 10 mit Bezug auf die daneben liegenden Pflanzvorrichtungen, die ebenfalls an den Hauptrahmen 16 angeschlossen sind.

Der Rahmen 14 stützt sich über einstellbare Laufräder 18 auf dem Boden ab, wodurch die Höhenlage der in der Zeichnung nicht dargestellten Furchenöffnungsvorrichtung gesteuert wird. Zwei nebeneinander angeordnete Scheiben 20 sind Teile einer Zudeckvorrichtung und sind über einen Tragarm mit dem Rahmen 14 verbunden. Die Scheiben üben eine nach unten gerichtete Kraft aus, und zwar neben der eigentlichen Furche, so daß hierdurch die Furche über die Scheiben zugedeckt und somit das Saatgut in dem Boden einwandfrei eingebettet wird.

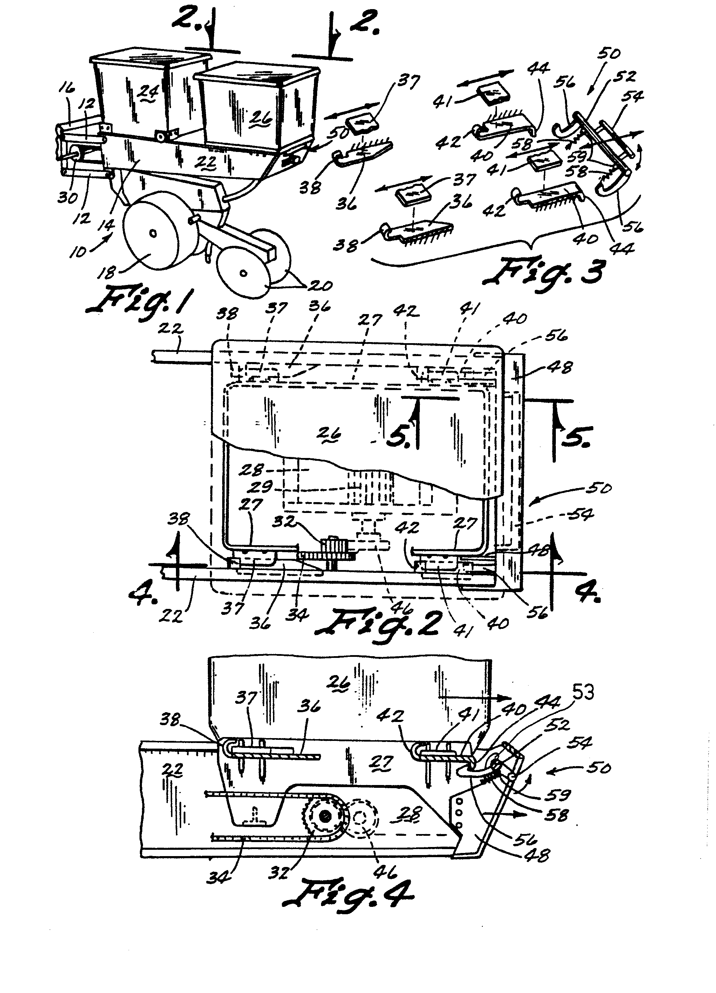

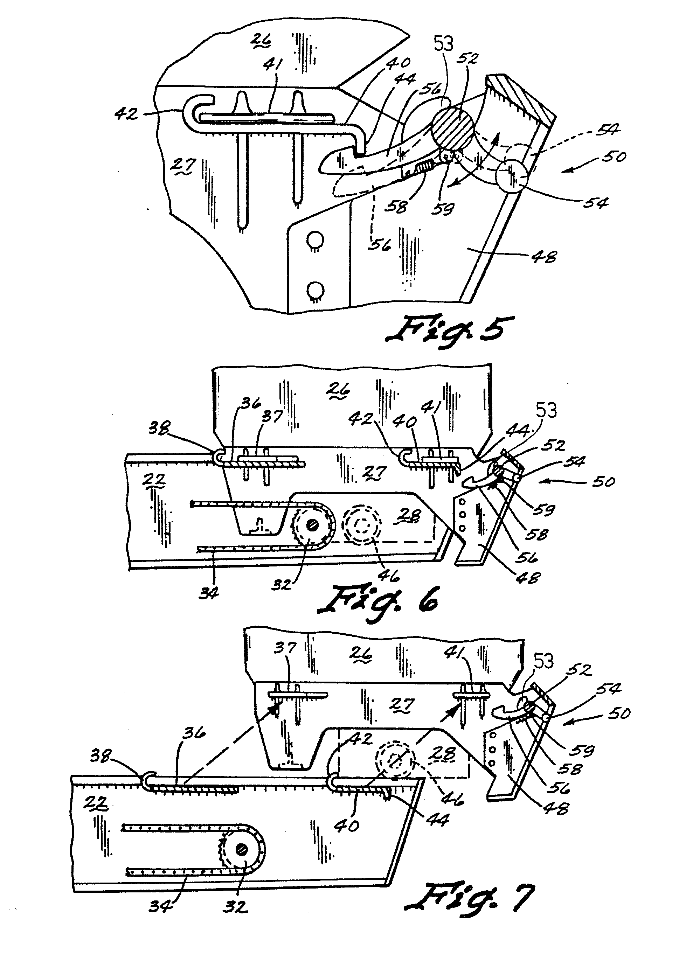

Der obere Teil des Rahmens 14 weist zwei parallel verlaufende Paneele 22 auf, die sich in Fahrtrichtung der Sämaschine erstrecken. Die Seitenpaneele 22, die Teil des Rahmens 14 sind, dienen zur Aufnahme des Saatgutbehälters 24 mit einer in der Zeichnung nicht dargestellten Saatgut-Meßvorrichtung sowie einem Sammelbehälter 26 für Düngemittel, dem eine Dosiervorrichtung 28 (Fig. 2) zugeordnet ist. Die Saatgut-Meßvorrichtung sowie die Dosiervorrichtung 28 sind über eine Hauptantriebsvorrichtung 30 (Fig. 1) wirkungsmäßig miteinander verbunden.

Wie aus den Figuren 2 bis 4 hervorgeht, tragen die Seitenpaneele 22 ein Antriebsrad bzw. Kettenrad 32, das über eine Antriebskette 34 mit der Hauptantriebsvorrichtung 30 verbunden ist. Ein jedes Seitenpaneel 22 trägt im vorderen Bereich ein Führungselement 36 und im hinteren Bereich ein Führungselement 40, die untereinander einen horizontalen Abstand aufweisen. Das Führungselement 36 weist einen nach oben und hinten gerichteten hakenförmigen Anschlag 38 auf, während das vordere Führungselement 40 einen nach oben und hinten gerichteten Anschlag 42 aufweist. Ferner weist das hintere Ende des Führungselementes 40 eine nach unten gerichtete Lasche 44 auf.

Wie aus den Figuren 2 und 4 hervorgeht, trägt der Sammelbehälter 26 die Dosiervorrichtung 28 im unteren Bereich. Die Dosiervorrichtung 28 weist ein drehbar gelagertes Förderelement 29 auf (Fig. 2), das über ein Zahnrad 46 angetrieben wird, welches wahlweise mit dem Antriebsrad 32 in Eingriff bringbar ist.

In den Figuren 3 bis 5 sind zwei vertikal verlaufende Tragplatten 27 dargestellt, die sich von den Seiten des Sammelbehälters 26 nach unten erstrecken. Eine jede Tragplatte 27 weist eine vordere Gleitplatte 37 und eine hintere Gleitplatte 41 auf, die mit horizontalem Abstand zueinander angeordnet und in den Führungselementen 36 und 40 verschiebbar aufgenommen sind. Die Tragplatten 27 sind an ihren rückwärtigen Enden durch eine Endplatte 48 verbunden, die zur Aufnahme einer Verriegelungsvorrichtung 50 dient. Die Verriegelungsvorrichtung 50 weist eine Welle 52 auf, die in einer Halterung 53 aufgenommen ist. Die Welle 52 trägt einen Handgriff 54, der sich von der Endplatte 48 nach hinten erstreckt, sowie zwei mit Abstand zueinander angeordnete Haken 56, die mit der Lasche 44 in Eingriff bringbar sind. Die Haken 56 werden über eine Zugfeder 58 nach oben gezogen, die hierzu einenends an eine an der Welle 52 angeordnete Öse 59 und anderenends an die Halterung 53 angeschlossen ist.

Befindet sich die Sävorrichtung 10 im Arbeitseinsatz, so wird der Sammelbehälter 26 auf den Seitenpaneelen 22 angeordnet und mit diesen fest verbunden (siehe Fig. 4). Ist der Sammelbehälter 26 gesichert, so kann das Zahnrad 46 mit dem Antriebsrad 32 in Eingriff gebracht werden, um das Förderelement 29 anzutreiben und somit das Düngemittel aus dem Sammelbehälter 26 herauszubewegen. Das Zahnrad 46 ist gegen eine rückwärtige Verstellung durch den Haken 56 gesichert, der hierzu mit der Lasche 44 in Eingriff steht. Die Gleitplatten 37 und 41 dienen auch zur Sicherung gegen eine Verstellung in eine andere Richtung. Sie sind hierzu in den Halterungen bzw. Führungselementen 36 und 40 aufgenommen.

Ist der Sammelbehälter 26 für Düngemittel entfernt, so kann der Handgriff 54 nach oben in eine in gestrichelten Linien dargestellte Stellung gemäß Fig. 5 verschwenkt werden. Durch den Handgriff 54 wird das Herausschieben des Sammelbehälters erleichtert. Durch Anheben des Handgriffes 54 wird der Haken 56 von der Lasche 44 entfernt; so läßt sich der Sammelbehälter 26 auf einer horizontalen Ebene aus der Position 6 in die Position 7 verschieben. Nach der Verstellung des Sammelbehälters 26 nach hinten wird die Antriebsverbindung zwischen dem Zahnrad 46 und dem Antriebsrad 32 unterbrochen. Ist der Sammelbehälter 26 mittels der Gleitplatten 37 und 41 nach hinten verstellt, so wird der Abbau des Sammelbehälters 26 nicht mehr behindert, da die Anschläge 38 und 42 die Gleitplatten 37 und 41 freigeben. Der Sammelbehälter 26 kann nun ohne weiteres von den Paneelen 22 abgehoben werden (siehe Fig. 7).

Der Sammelbehälter 26 kann auf einfache Weise wieder auf die Seitenpaneele 22 abgesetzt werden, wobei dann die einzelnen Arbeitsschritte in umgekehrter Reihenfolge durchgeführt werden müssen. Die Führungselemente 36 und 40 gestatten eine einfache Verstellung des Sammelbehälters 26 auf den Seitenpaneelen 22 in die gewünschte Position. Ist der Sammelbehälter 26 in die Stellung gemäß Fig. 4 verstellt, so untergreift der federbeaufschlagte Haken 56 die Lasche 44 und sichert damit den Sammelbehälter 26 auf den Paneelen 22 gegen ein unbeabsichtigtes Verstellen.

## Patentansprüche

1. Sämaschine mit mindestens einer Sävorrichtung (10), auf deren Rahmen (14) ein Sammelbehälter (26) lösbar angeschlossen ist, der mit einer über eine Antriebsvorrichtung antreibbaren Dosierungsvorrichtung (28) ausgerüstet ist, dadurch gekennzeichnet, daß die Dosierungsvorrichtung (28) ein getriebenes Antriebsrad (Zahnrad 46) aufweist, das mittels Führungselementen (36, 40) mit dem Sammelbehälter zwischen einer ersten Stellung, in der das getriebene Antriebsrad mit einem antreibbaren Treibelement (Antriebsrad 32) in Antriebsverbindung bringbar ist, und einer zweiten Stellung horizontal verschiebbar ist, in der die Antriebsverbindung unterbrochen ist, wobei in der ersten Stellung des Sammelbehälters (26) das antreibbare Treibelement über Arretierungselemente (Haken 56, Lasche 44) gegen Verstellen sicherbar ist.

2. Sämaschine nach Anspruch 1, dadurch gekennzeichnet, daß der horizontal verschiebbare Sammelbehälter (26) horizontal verlaufende Gleitplatten (37, 41) aufweist, die auf mit dem Rahmen (14) verbundenen Führungselementen (36, 40) verschiebbar gelagert sind.

3. Sämaschine nach Anspruch 1, dadurch gekennzeichnet, daß die Arretierungselemente aus nach oben gerichteten, hakenförmigen, an den Führungselementen (36, 40) angeordneten Anschlägen sowie aus einer Verriegelungsvorrichtung (50) bestehen.

4. Sämaschine nach den Ansprüchen 1 und 3, dadurch gekennzeichnet, daß die Verriegelungsvorrichtung (50) aus an den Führungselementen (36, 40) vorgesehenen Laschen (44) und aus über einen Handgriff verstellbaren Haken (56) gebildet ist, die am Sammelbehälter (26) verschwenkbar gelagert und mit den Laschen (44) in Eingriff bringbar sind.

5. Sämaschine nach einem oder mehreren der vorhergehenden Ansprüche, dadurch gekennzeichnet, daß die Haken (56) an der Rückseite des Sammelbehälters (26) angeordnet und über eine Feder (58) in eine den Sammelbehälter (26) sichernde Stellung bringbar sind.

6. Sämaschine nach einem oder mehreren der vorhergehenden Ansprüche, dadurch gekennzeichnet, daß der Rahmen (14) aus zwei parallel zueinander verlaufenden Paneelen (22) gebildet ist, an denen die Führungselemente (36, 40) seitlich angeordnet sind, während die Gleitplatten (37, 41) im Bereich der Seitenkanten des Sammelbehälters an seiner Unterseite angeordnet sind und sich auf den Führungselementen (36, 40) abstützen.

Fig.1

Fig.2

Fig.3

Fig.4

Fig. 5

Fig. 6

Fig. 7

Europäisches
Patentamt

EUROPÄISCHER RECHERCHENBERICHT

**0140260**
Nummer der Anmeldung

EP 84 11 2356

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 714 913 (E.S. GANDRUD)<br>* Figuren 1, 4; Spalte 2, Zeile 33 - Spalte 3, Zeile 18 *<br><br>--- | 1 | A 01 C 15/00 |
| A | AT-B- 174 234 (A.R. BELAK)<br>* Seite 2, Zeilen 36-42 *<br><br>----- | 1 | |

RECHERCHIERTE
SACHGEBIETE (Int. Cl.4)

A 01 B 49/00
A 01 B 51/00
A 01 C 7/00
A 01 C 15/00

Der vorliegende Recherchenbericht wurde für alle Patentansprüche erstellt.

| Recherchenort<br>BERLIN | Abschlußdatum der Recherche<br>09-01-1985 | Prüfer<br>WUNDERLICH J E |
|---|---|---|